# EUROPEAN PATENT SPECIFICATION

(11) **EP 3 012 442 B1**
(45) Date of publication and mention of the grant of the patent: **05.08.2020**
(21) Application number: 15190886.0
(22) Date of filing: 21.10.2015
(51) Int. Cl.: F02K 1/38, F02K 1/48

(54) **INTEGRATED TURBINE EXHAUST STRUTS AND MIXER OF TURBOFAN ENGINE**
INTEGRIERTE STREBEN UND MISCHER EINES TURBOFAN TRIEBWERKS
BRAS SUPPORT ET MÉLANGEUR INTÉGRÉS DE MOTEUR TURBOFAN

(30) Priority: 23.10.2014 US 201414521888
(43) Date of publication of application: 27.04.2016
(73) Proprietor: Pratt & Whitney Canada Corp., Longueuil, Québec J4G 1A1 (CA)
(72) Inventor: MARINI, Remo, Longueuil, Québec J4G 1A1 (CA); CUNNINGHAM, Mark Huzzard, Longueuil, Québec J4G 1A1 (CA)
(74) Representative: Dehns

(56) References cited:
- DE-A1-102007 004 741
- GB-A- 2 014 665
- US-A1- 2011 036 068
- US-A1- 2013 115 076

## Description

### TECHNICAL FIELD

The application relates generally to turbofan aero-engines and, more particularly to an improved turbine exhaust case including a mixer for such engines.

### BACKGROUND OF THE ART

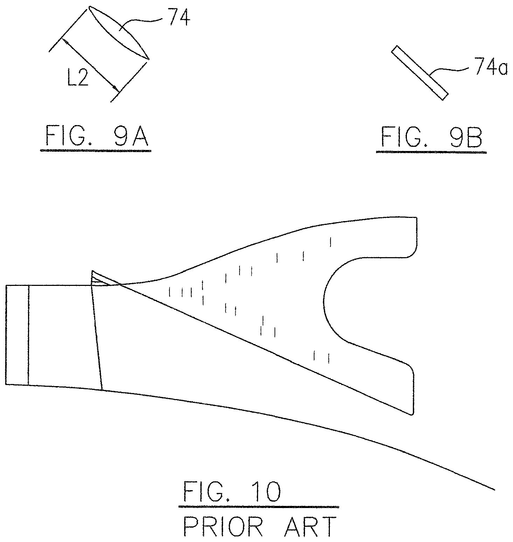

In order to increase the effective thrust of turbojet engines, bladed fans have been added to a turbine driven shaft thereof to affect the flow of a quantity of atmospheric air through an annular bypass duct surrounding the turbojet. Hot gases exhausted from the engine core and the bypass airstream are mixed together before expulsion through a single nozzle. In order to perform the mixing function, mixers have been attached to the downstream end of a shroud of the turbine exhaust case (TEC). A swirling flow of exhaust gases from the turbine exit is conventionally deswirled by a plurality of deswirling struts located within the TEC, upstream of the mixer as shown in FIG. 10, such that the exhausted gases are substantially deswirled prior to entering the mixer in order to maximize the performance of the struts and mixer individually and to promote efficient mixing with minimum pressure losses. Nevertheless, there is room for improvement of such a conventional configuration of deswirling struts and mixer.

Accordingly there is a need to provide an improved mixer.

DE 10 2007 004741 A1 discloses a prior art turbine exhaust case as set forth in the preamble of claim 1.

### SUMMARY

According to the invention, there is provided a turbine exhaust case (TEC) of a turbofan aeroengine as set forth in claim 1.

The invention also extends to a turbofan engine as set forth in claim 5.

### DESCRIPTION OF THE DRAWINGS

Reference is now made to the accompanying figures in which:
FIG. 1 is a schematic side cross-sectional view of an examplary turbofan aeroengine showing an application of the described subject matter according to one embodiment;
FIG. 2 is a perspective view of a turbine exhaust case mixer according to one embodiment which may be used in the engine of FIG. 1;
FIG. 3 is a partial cross-sectional view of the engine of FIG. 1, showing another embodiment of the mixer integrated with deswirling struts in an enlarged scale;
FIG. 4 is a perspective view of the mixer incorporated with the deswirling strut of FIG. 3, with the deswirling strut partially cut away to show a cross-section thereof;
FIG. 5 is a cross-sectional view of the deswirling strut to show the cross-section of the deswirling strut in FIG. 4 having an airfoil profile;
FIG. 6 is a side and rear perspective view of a circumferential section of a turbine exhaust case and a mixer integrated with deswirling struts and secondary struts according to another embodiment;
FIG. 7 is a side and front perspective view the circumferential section of the turbine exhaust case and mixer integrated with the deswirling struts and the secondary struts of FIG. 6;
FIG. 8 is side perspective view of the circumferential section of the turbine exhaust case and the mixer integrated with the deswirling struts and secondary struts of FIG. 6;
FIG. 9A is a cross-sectional view of the secondary strut of FIG. 6 having an airfoil profile;
FIG. 9B is a cross-sectional view of the secondary strut of FIG. 6 formed alternatively by a flat plate; and
FIG. 10 is a partial cross-sectional view of a turbine exhaust case mixer conventionally attached to the turbine exhaust case downstream of deswirling struts installed within the turbine exhaust case.

It will be noted that throughout the appended drawings, like features are identified by like reference numerals.

### DETAILED DESCRIPTION

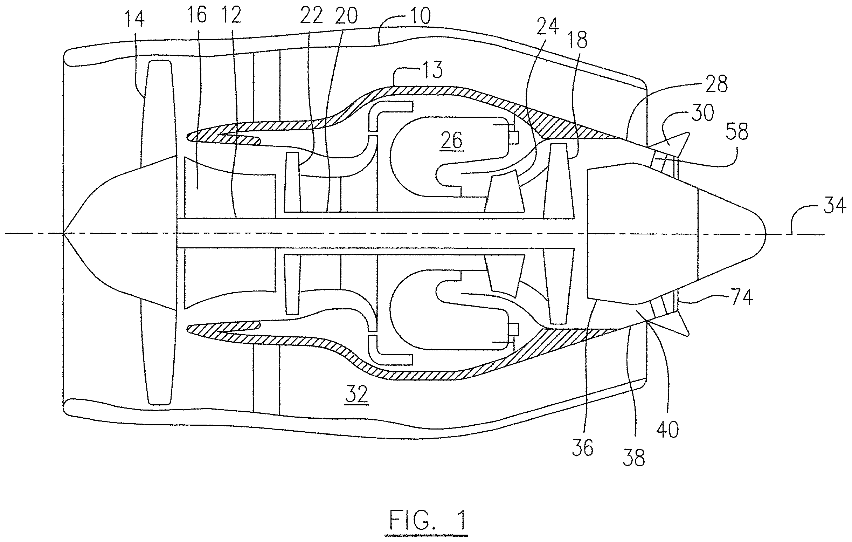

FIG. 1 illustrates an exemplary turbofan aeroengine which includes a nacelle configuration 10, a core casing 13, a low pressure spool assembly seen generally at 12 which includes a fan assembly 14, a low pressure compressor assembly 16 and a low pressure turbine assembly 18, and a high pressure spool assembly seen generally at 20 which includes a high pressure compressor assembly 22 and a high pressure turbine assembly 24. The core casing 13 surrounds the low and high pressure spool assemblies 12 and 20 in order to define a main fluid path (not numbered) therethrough. In the main fluid path there is provided a combustion chamber 26 in which a combustion process produces combustion gases to power the high and low turbine pressure assemblies 24 and 18. A turbine exhaust case (TEC) 28 is provided to form a downstream end of the core casing 13 and a mixer 30 is attached to the downstream end of the TEC 28 for mixing hot exhaust gases discharged from the high and low pressure turbine assemblies 24, 18 through the main fluid path, with a bypass airstream driven by the fan assembly 14 through an annular bypass duct 32 which is defined radially between the nacelle configuration 10 and the core casing 13.

Referring to FIGS. 1-3, the TEC 28 and the mixer 30 define a common central axis 34 which substantially superposes a central rotation axis of the aeroengine. The TEC 28 includes an annular hub 36 and an annular shroud 38 with the annular mixer 30 attached to a downstream end of the shroud 38. The shroud 38 and the mixer 30 surround the hub 36 to form an annular exhaust gas duct 40 disposed radially therebetween.

It should be noted that the terms "upstream" and "downstream" used herein and hereinafter refer to the direction of a fluid flow passing through the main fluid path of the engine. It should also be noted that the terms "axial", "radial" and "circumferential" are used with respect to the central axis 34.

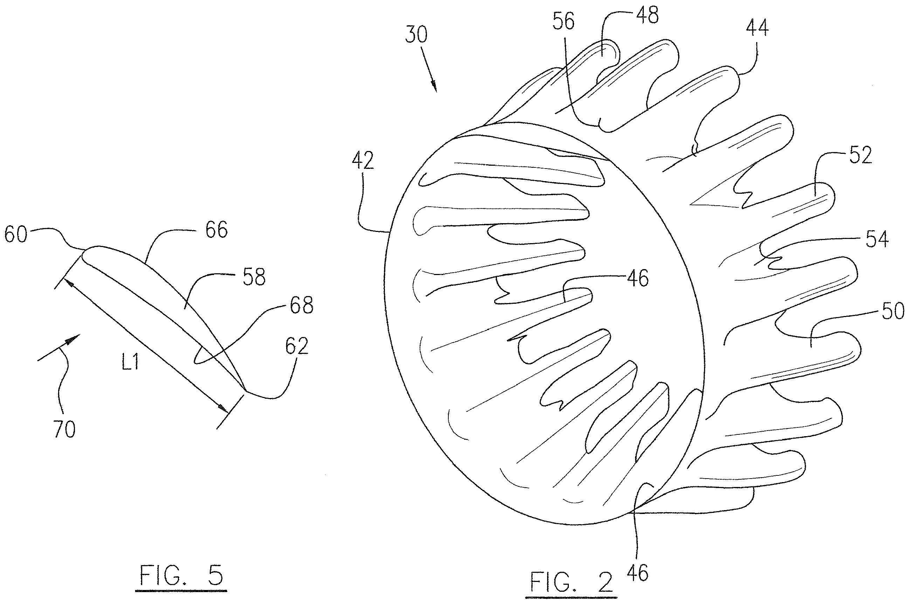

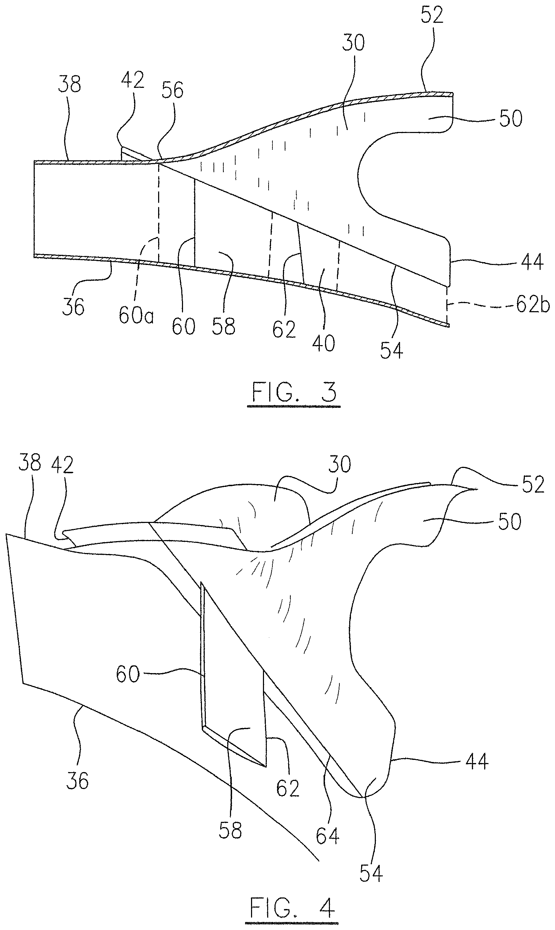

The mixer 30 according to one embodiment such as shown in FIG. 2, may define an annular wavy configuration around the central axis 34 and may axially extend between an upstream end 42 and a downstream end 44 thereof. The mixer 30 may include inner and outer circumferential flow surfaces 46, 48 extending between the upstream and downstream ends 42, 44 of the mixer 30. The inner and outer flow surfaces 46, 48 may be in a circumferentially wavy or twisted annular configuration to thereby form a plurality of lobes 50 of the mixer 30. The lobes 50 may be axially extending or axially straight and may define a plurality of alternating crests 52 and valleys 54. In a cross-sectional view as shown in FIG. 3, adjacent crest 52 and valley 54 extend from an axial start point 56 which is close to the upstream end 42 (more clearly shown in FIG. 3) and diverging to the downstream end 44 of the mixer 30.

The inner surface 46 may define inner passageways (not numbered) axially and radially-outwardly along the respective crests 52 for directing the exhaust gases flowing through the annular exhaust gas duct 40. The outer flow surface 48 may define external passageways (not numbered) axially and radially-inwardly along the respective valleys 54 for directing the bypass airstream coming through the annular bypass air duct 32 to flow through the mixer 30. Therefore, the internal and external passageways of the mixer 30 may in combination establish a vortex system downstream of the mixer 30 to encourage mixing between the bypass airstream and the turbine exhaust gases during operation of the aeroengine.

Referring to FIGS. 1 and 3-5, the mixer 30 according to one embodiment may include a plurality of deswirling struts 58 circumferentially spaced apart with respect to the central axis 34, and integrated with the mixer. The deswirling struts 58 may be disposed within an axial length of the mixer 30, between the upstream end 42 and the downstream end 44 of the mixer 30. The deswirling struts 58 may extend radially across the annular exhaust gas duct 40 and may interconnect the mixer 30 and the hub 36 of the TEC 28.

The deswirling struts 58 each include a leading edge 60 and a trailing edge 62. The trailing edge 62 of each deswirling strut 58 according to one embodiment may circumferentially align with a bottom of the valley 54 such as a bottom line 64 (see FIG. 4) which is a center line of the valley 54. The deswirling struts 58 according to one embodiment may be axially located in a middle area of the mixer 30 such that the leading edges 60 of the respective deswirling struts 58 are axially spaced away from the starting point 56 of the divergently extending crests 52 and valleys 54 and such that the trailing edges 62 of the respective deswirling struts 58 are axially spaced away from a downstream end of the respective valleys 54 of the mixer 30. The downstream end of the respective valleys 54 according to this embodiment are the downstream end 44 of the mixer 30 because the crests 52 and valleys 54 have a substantially equal axial length as shown in FIG. 3. However, if the axial length of the valleys 54 is less than the axial length of the crests 52, such as illustrated in the embodiment shown in FIG. 2, the downstream end of the valleys 54 will not be the downstream end of the mixer 30.

Optionally, the deswirling struts 58 may each have a cambered profile, for example including a convex side 66 and a concave side 68 extending between the leading and trailing edges 60 and 62 as shown in the cross-sectional view of the deswirling strut 58 in FIG. 5. The struts 58 are cambered in the direction of an incoming swirling flow of the exhaust gases, as indicated by arrow 70 in FIG. 5.

According to one embodiment the deswirling of the swirling flow 70 of the exhaust gases discharged from the low pressure turbine assembly 38 and passing through the annular exhaust gas duct 40, may be accomplished within the mixer 30 by both the deswirling struts 58 and the mixer lobes 50. The swirling flow 70 of exhaust gases passing through the annular exhaust gas duct 40 near the hub 36 may be deswirled by the deswirling struts 58. The swirling flow 70 of the exhaust gases passing through the annular exhaust gas duct 40 near the shroud 38 may be deswirled by the lobes 50 of the mixer 30. With the configuration as described in the above embodiments, the deswirling and mixing functions may be accomplished within a much shorter axial length of the TEC and mixer in contrast to conventional TEC and mixer configurations, thereby advantageously saving engine and nacelle weight. The configuration of the above-described embodiments, can deswirl the swirling flow of exhaust gases and mix the exhaust gases with the bypass air stream with a performance equivalent to or better than that of conventional separate mixer and TEC struts.

The size, shape and position of the deswirling struts may be optimized based on the application and are dependent on the flow conditions including the residual swirl condition from the low pressure turbine assembly 18. The deswirling struts according to the described embodiments may be incorporated into any conventional TEC mixer when the swirl in the exhausted gases is required to be removed. For example, some of the described embodiments may be applicable to TEC mixers in which the axial length of the valleys of the mixers are longer than the axial length of the crests of the mixers.

Alternatively, the deswirling struts 58 may be axially located within the mixer 30 such that the leading edge 60 of each of the deswirling struts 58 axially aligns with the start point 56 of the divergently extending crests 52 and valleys 54, as shown by broken line 60a in FIG. 3. Also alternatively, the deswirling struts 58 may be axially located within the mixer 30 such that the trailing edge 62 of each of the deswirling struts 58 axially aligns with the downstream end of the respective valleys 54, as indicated by broken line 62b in FIG. 3.

Optionally, each of the valleys 54 of the mixer 30 may be connected with one of the deswirling struts. Also optionally, every second one of the valleys 54 of the mixer 30 may be connected with one of the deswirling struts. Furthermore, the deswirling struts may be circumferentially located at other intervals of the valleys 54 of the mixer 30.

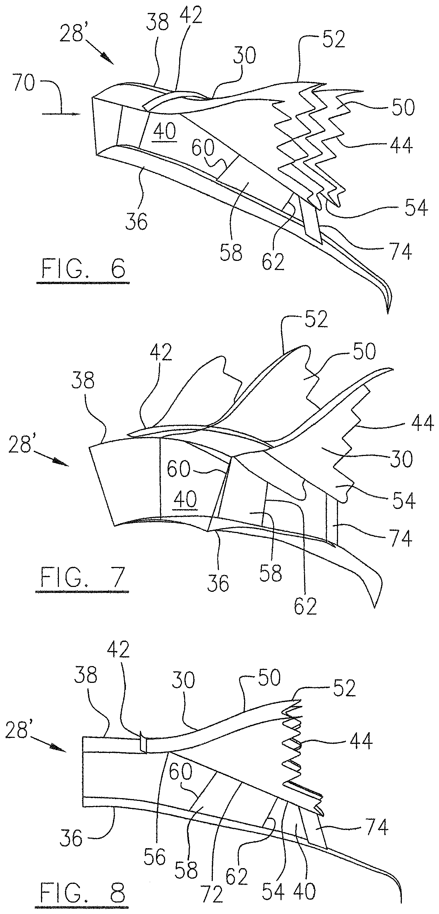

Referring to another embodiment as shown in FIGS. 6-9B, a TEC 28' (only a circumferential section thereof is shown in the drawings FIG 6-8), similar to the TEC 28 as described with reference to FIGS. 1-5, includes the inner annular hub 36, the annular shroud 38 with the mixer 30. Like features are indicated by like reference numerals and will not be redundantly described. The further description of the TEC 28' will be focussed on the difference between this embodiment and the TEC 28 as described with reference to FIGS. 1-5.

The radial deswirling struts 58 extending radially across the annular exhaust gas duct 40 to interconnect the mixer 30 and the annular hub 36, are fewer in number than the number of the valleys 54 of the mixer 30, and therefore, the respective deswirling struts 58 are connected to only a first selected group of the valleys 54, not to all the valleys of the mixer 30. A plurality of secondary trailing edge struts 74 may be provided in the TEC 28' radially extending across the annular gas duct 40 to interconnect the mixer 30 and the annular hub 36. The secondary struts 74 are fewer in number than the number of the lobes 50 or the number of the valleys 54 of the mixer 30, and may be connected to a second selected group of the valleys 54 which are free of connection with the deswirling struts 58. The secondary struts 74 may be axially located immediately upstream of a trailing edge (not numbered) of the respective valleys 54 of the selected second group. A chord length of a strut may vary radially, however, the secondary struts 74 and may each have an average chord length L2 (see FIG. 9A) shorter than the average chord length L1 of the respective deswirling struts 58 (see FIG. 5). Therefore, the overall secondary strut size is smaller than the overall deswirling strut size, regardless of the radial variation of the chord.

Similar to the previously described embodiment, the deswirling struts 58 may each have a cambered profile, for example being cambered in a direction of an incoming swirling flow 70 of the exhaust gases, as shown in FIG. 5. The smaller secondary struts 74 may each have an airfoil profile (see FIG. 9A) with or without a chambered shape. Alternatively, the smaller secondary struts 74a may each be formed by a flat plate (see FIG. 9B). The smaller secondary struts 74, 74a, regardless of the shape options thereof, may be placed in an orientation similar to the orientation of the deswirling struts 58 with respect to the incoming swirling flow 70 of the exhaust gases (see FIG. 5).

While the secondary struts 74 may be axially located immediately upstream of the trailing edges of the selected valleys 54 of the second group with which the secondary struts are connected, the deswirling struts 58 may be located in the middle of the mixer 30, and may be axially spaced away from the trailing edges of the selected valleys 54 of the first group with which the deswirling struts are connected. Optionally, the leading edges 60 of the respective deswirling struts 58 may be axially spaced away from the axial start point 56 (see FIG. 8) of the divergently extending crests 52 and valleys 54, and the trailing edges 62 of the respective deswirling struts 58 (as shown in FIG. 5) may be axially spaced away from the trailing edges of the respective selected valleys 54 of the first group with which the deswirling struts are connected. Optionally, the deswirling struts 58 may be axially located between an axial center point 72 (see FIG. 8) of the respective selected valleys 54 of the first group with which the respective deswirling struts are connected, and the axial start point 56 (see FIG. 8) of the divergently extending crests 52 and valleys 54, that is, the deswirling struts 58 may be located in an axial upstream half of the mixer.

In TEC 28' the deswirling struts 58 and the secondary struts 74 may be circumferentially distributed in various alternating patterns. For example, each of the deswirling struts 58 may be positioned between two circumferentially adjacent secondary struts 74. Optionally, each of the secondary struts 74 may be positioned between two circumferentially adjacent deswirling struts 58. Also optionally, the deswirling struts 58 and the secondary struts 74 may be circumferentially distributed in an alternating pattern of every one or more of the deswirling struts 58 and every one or more of the secondary struts 74.

The total number of the deswirling struts 58 and the secondary struts 74 of the mixer 30 may be equal to or less than the number of the lobes 50 or the number of the valleys 54 of the mixer 30.

The downstream end 44 of the TEC 28' may be formed in various shapes of trailing edges of the mixer 30, including trailing edges of the valleys 54 and trailing edges of the crests 52. For example, the downstream end 44 of the mixer 30 may form a jagged trailing edge (not numbered) as illustrated in FIGS. 6-8, which is described in US Patent 8,635,875 granted to Cunningham on January 28, 2014..

The actual combination, such as the number of the integrated deswirling struts 58 and the secondary trailing edge struts 74 may vary and is dependent on various mixer performance requirements in particular engine designs such as pressure loss, mixing and residual nozzle swirl. The number of integrated deswirling struts 58 of the TEC 28' embodiment need not be equal to the number of mixer lobes 50 since the mixer 30 itself can partially deswirl the core flow in the TEC 28' without a significant increase in pressure losses. The region of the core flow near the central body (the annular hub 36) and below the mixer valleys 54, requires adequate deswirling of the exhaust gases to maximize thrust in the axial direction at the nozzle exit. This is accomplished by the secondary trailing edge struts 74 being positioned just upstream of the mixer valley trailing edges. Hence, the lower core flow between the central body and the mixer valleys 54 is deswirled by the integrated deswirling struts 58 and the secondary trailing edge struts 74 whereas the upper core flow between the valleys 54 and the mixer crests 52 is deswirled by the integrated deswirling struts 58 and the mixer 30 itself. The reduction in pressure loss due to fewer integrated deswirling struts 58 is partially offset by the increase in pressure loss on the mixer 30 (due to deswirling) and the secondary trailing edge struts 74 incorporation/presence. Therefore, in the above-described TEC embodiments, the deswirling performance and mixing performance are effectively accomplished within a compact axial length of the mixer 30, thereby saving engine and nacelle weight. A manufacturing fillet (by either welding, casting, additive manufacturing, etc) between the mixer valley 54 and deswirling strut 58 as well as between the annular hub 36 and deswirling strut 58 can be present. A manufacturing fillet between the mixer valley 54 and secondary trailing edge strut 74 as well as between the annular hub 36 and secondary trailing edge strut 74 can be present.

The above description is meant to be exemplary only, and one skilled in the art will recognize that changes may be made to the embodiments described without departing from the scope of the described subject matter. Modifications which fall within the scope of the described subject matter will be apparent to those skilled in the art, in light of a review of this disclosure, and such modifications are intended to fall within the appended claims.

## Claims

1. A turbine exhaust case (TEC) (28') of a turbofan aeroengine comprising an annular hub (36) and an annular shroud (38) with a mixer (30) attached to a downstream end of the shroud (38) for mixing exhaust gases with a bypass air stream, the mixer (30) including a plurality of axially extending lobes (50) of the mixer (30) arranged in alternating crests (52) and valleys (54) extending divergently in a downstream direction, the mixer (30) surrounding the hub (36) to form an annular exhaust gas duct (40) between the mixer (30) and the hub (36), **characterised in that** the TEC (28') further comprises:
a plurality of deswirling struts (58) extending generally radially across the annular exhaust gas duct (40) axially within the mixer (30) to connect the mixer (30) and the hub (36), the deswirling struts (58) being fewer in number than a total number of valleys (54) of the mixer (30) and connected to the mixer (30) via only a selected first group of the valleys (54) of the mixer (30); and
a plurality of secondary struts (74) each having an average chord length shorter than an average chord length of the respective deswirling struts (58), the secondary struts (74) generally radially extending across the annular gas duct (40) to connect the mixer (30) and the hub (36), the secondary struts (74) connected to the mixer (30) via a selected second group of the valleys (54) distinct from the first group of valleys (54), the secondary struts (74) connected to said second group of the valleys (54) immediately upstream of a trailing edge of said valleys (54).

2. The TEC as defined in claim 1 wherein the deswirling struts (58) each comprise a cambered profile, the cambered profile being cambered in a direction of an incoming swirling flow of the exhaust gases.

3. The TEC as defined in claim 1 or 2 wherein the deswirling struts (58) are axially spaced away from the trailing edges of the respective valleys (54) of the selected first group.

4. The TEC as defined in claim 1, 2 or 3 wherein the deswirling struts (58) are axially located in an axial upstream half of the mixer (30).

5. A turbofan aeroengine comprising the turbine exhaust case (TEC) (28') of claim 1 positioned downstream of a turbine section of the turbofan aeroengine for directing a flow of gases exhausted from the turbine section, the mixer (30) having a circumferential wavy configuration forming the plurality of axially extending lobes (50) defining the alternating crests (52) and the valleys (54) extending divergently to a downstream end of the TEC (28'), the crests (52) defining internal axial and radially-outward passages for directing gases exiting from the turbine section to pass through the TEC (28'), and the valleys (54) defining external axial and radially-inward passages for directing a bypass air stream to pass along an external surface of the TEC (28'), resulting in mixing of the gases with the bypass air stream, a number of circumferentially spaced deswirling struts (58) each having a cambered profile and being located within an axial length of the wavy configuration, the deswirling struts (58) radially interconnecting the annular hub (36) and the first selected group of the valleys (54), the secondary struts (74) radially interconnecting the annular hub (36) and the selected second group of the valleys (54) free of connection of the deswirling struts (58) and being located immediately upstream of a trailing edge of the selected second group of the valleys (54).

6. The TEC or turbofan aeroengine as defined in any preceding claim wherein the deswirling struts (58) each comprise a leading edge and a trailing edge, the leading edges of the deswirling struts (58) being axially spaced away from a start point of the divergently extending crests (52) and valleys (54), and the trailing edges of the deswirling struts (58) being axially spaced away from the trailing edges of the respective valleys (54) of the selected first group.

7. The TEC or turbofan aeroengine as defined in any preceding claim wherein the deswirling struts (58) and the secondary struts (74) are circumferentially distributed such that each of the deswirling struts (58) is positioned between adjacent two of the secondary struts (74).

8. The TEC or turbofan aeroengine as defined in any preceding claim wherein the deswirling struts (58) and the secondary struts (74) are circumferentially distributed such that each of the secondary struts (74) is positioned between adjacent two of the deswirling struts (58).

9. The TEC or turbofan aeroengine as defined in any preceding claim wherein the deswirling struts (58) and the secondary struts (74) are circumferentially distributed in an alternating pattern of every one or more of the deswirling struts (58) and every one or more of the secondary struts (74).

10. The TEC or turbofan aeroengine as defined in any preceding claim wherein a total number of the deswirling struts (58) and the secondary struts (74) is equal to the number of the valleys (54).

11. The TEC or turbofan aeroengine as defined in any of claims 1 to 9 wherein a total number of the deswirling struts (58) and the secondary struts (74) is less than the number of the valleys (54).

12. The TEC or turbofan aeroengine as defined in any preceding claim wherein the downstream end of the TEC (28') comprises a jagged trailing edge.

13. The TEC or turbofan aeroengine as defined in any preceding claim wherein the secondary struts (74) each comprise an airfoil profile.

14. The TEC or turbofan aeroengine as defined in any of claims 1 to 12 wherein the secondary struts (74) each comprise a flat plate.

## Patentansprüche

1. Turbinenabgasgehäuse (turbine exhaust case - TEC) (28') eines Turbofan-Flugtriebwerks, umfassend eine ringförmige Nabe (36) und eine ringförmige Verschalung (38) mit einem an einem stromabwärtigen Ende der Verschalung (38) angebrachten Mischer (30) zum Mischen von Abgasen mit einem Bypass-Luftstrom, wobei der Mischer (30) eine Vielzahl von sich axial erstreckenden Lappen (50) des Mischers (30) beinhaltet, die in alternierenden Kuppen (52) und Tälern (54) angeordnet ist, die sich divergierend in einer stromabwärtigen Richtung erstrecken, wobei der Mischer (30) die Nabe (36) umgibt, um einen ringförmigen Abgaskanal (40) zwischen dem Mischer (30) und der Nabe (36) zu bilden, **dadurch gekennzeichnet, dass** das TEC (28') ferner Folgendes umfasst:
eine Vielzahl von Entwirbelungsstreben (58), die sich im Allgemeinen radial über den ringförmigen Abgaskanal (40) axial innerhalb des Mischers (30) erstreckt, um den Mischer (30) und die Nabe (36) zu verbinden, wobei die Anzahl der Entwirbelungsstreben (58) geringer ist als eine Gesamtzahl von Tälern (54) des Mischers (30) und sie mit dem Mischer (30) nur über eine ausgewählte erste Gruppe der Täler (54) des Mischers (30) verbunden sind; und
eine Vielzahl von sekundären Streben (74), die jeweils eine durchschnittliche Sehnenlänge aufweist, die kürzer als eine durchschnittliche Sehnenlänge der jeweiligen Entwirbelungsstreben (58) ist, wobei sich die sekundären Streben (74) im Allgemeinen radial über den ringförmigen Gaskanal (40) erstrecken, um den Mischer (30) und die Nabe (36) zu verbinden, wobei die sekundären Streben (74) mit dem Mischer (30) über eine ausgewählte zweite Gruppe der Täler (54) verbunden sind, die sich von der ersten Gruppe von Tälern (54) unterscheidet, wobei die sekundären Streben (74) mit der zweiten Gruppe der Täler (54) unmittelbar stromaufwärts einer Hinterkante der Täler (54) verbunden sind.

2. TEC nach Anspruch 1, wobei die Entwirbelungsstreben (58) jeweils ein gewölbtes Profil umfassen, wobei das gewölbte Profil in Richtung einer einströmenden Wirbelströmung der Abgase gewölbt ist.

3. TEC nach Anspruch 1 oder 2, wobei die Entwirbelungsstreben (58) axial von den Hinterkanten der jeweiligen Täler (54) der ausgewählten ersten Gruppe beabstandet sind.

4. TEC nach Anspruch 1, 2 oder 3, wobei die Entwirbelungsstreben (58) axial in einer axial stromaufwärtigen Hälfte des Mischers (30) angeordnet sind.

5. Turbofan-Flugtriebwerk, umfassend das Turbinenabgasgehäuse (TEC) (28') nach Anspruch 1, das stromabwärts eines Turbinenabschnitts des Turbofan-Flugtriebwerks positioniert ist, um einen aus dem Turbinenabschnitt ausgestoßenen Gasstrom zu leiten, wobei der Mischer (30) eine am Umfang wellenförmige Konfiguration aufweist, die die Vielzahl von sich axial erstreckenden Lappen (50) bildet, welche die alternierenden Kuppen (52) und Täler (54) definiert, die sich divergierend zu einem stromabwärtigen Ende des TEC (28') erstrecken, wobei die Kuppen (52) innere axiale und radial äußere Kanäle definieren, um Gase, die aus dem Turbinenabschnitt austreten, durch den TEC (28') zu leiten, und wobei die Täler (54) äußere axiale und radial innere Kanäle definieren, um einen Bypass-Luftstrom so zu leiten, dass er entlang einer Außenfläche des TEC (28') strömt, was zu einer Vermischung der Gase mit dem Bypass-Luftstrom führt, wobei eine Anzahl von in Umfangsrichtung beabstandeten Entwirbelungsstreben (58) jeweils ein gewölbtes Profil aufweisen und innerhalb einer axialen Länge der wellenförmigen Konfiguration angeordnet sind, wobei die Entwirbelungsstreben (58) die ringförmige Nabe (36) und die erste ausgewählte Gruppe der Täler (54) radial miteinander verbinden, die sekundären Streben (74) die ringförmige Nabe (36) und die ausgewählte zweite Gruppe der Täler (54) radial miteinander verbinden, frei von einer Verbindung der Entwirbelungsstreben (58), und sich unmittelbar stromaufwärts einer Hinterkante der ausgewählten zweiten Gruppe der Täler (54) befinden.

6. TEC oder Turbofan-Flugtriebwerk nach einem der vorstehenden Ansprüche, wobei die Entwirbelungsstreben (58) jeweils eine Vorderkante und eine Hinterkante umfassen, wobei die Vorderkanten der Entwirbelungsstreben (58) axial von einem Startpunkt der sich divergierend erstreckenden Kuppen (52) und Täler (54) beabstandet sind und die Hinterkanten der Entwirbelungsstreben (58) axial von den Hinterkanten der jeweiligen Täler (54) der ausgewählten ersten Gruppe beabstandet sind.

7. TEC oder Turbofan-Flugtriebwerk nach einem der vorstehenden Ansprüche, wobei die Entwirbelungsstreben (58) und die sekundären Streben (74) in Umfangsrichtung so verteilt sind, dass jede der Entwirbelungsstreben (58) zwischen zwei benachbarten sekundären Streben (74) angeordnet ist.

8. TEC oder Turbofan-Flugtriebwerk nach einem der vorstehenden Ansprüche, wobei die Entwirbelungsstreben (58) und die sekundären Streben (74) in Umfangsrichtung so verteilt sind, dass jede der sekundären Streben (74) zwischen zwei benachbarten Entwirbelungsstreben (58) angeordnet ist.

9. TEC oder Turbofan-Flugtriebwerk nach einem der vorstehenden Ansprüche, wobei die Entwirbelungsstreben (58) und die sekundären Streben (74) in einem alternierenden Muster von jeder oder mehreren der Entwirbelungsstreben (58) und jeder oder mehreren der sekundären Streben (74) in Umfangsrichtung verteilt sind.

10. TEC oder Turbofan-Flugtriebwerk nach einem der vorstehenden Ansprüche, wobei eine Gesamtzahl der Entwirbelungsstreben (58) und der sekundären Streben (74) gleich der Anzahl der Täler (54) ist.

11. TEC oder Turbofan-Flugtriebwerk nach einem der Ansprüche 1 bis 9, wobei eine Gesamtzahl der Entwirbelungsstreben (58) und der sekundären Streben (74) kleiner ist als die Anzahl der Täler (54) .

12. TEC oder Turbofan-Flugtriebwerk nach einem der vorstehenden Ansprüche, wobei das stromabwärtige Ende des TEC (28') eine zackenförmige Hinterkante umfasst.

13. TEC oder Turbofan-Flugtriebwerk nach einem der vorstehenden Ansprüche, wobei die sekundären Streben (74) jeweils ein Schaufelprofil umfassen.

14. TEC oder Turbofan-Flugtriebwerk nach einem der Ansprüche 1 bis 12, wobei die sekundären Streben (74) jeweils eine flache Platte umfassen.

## Revendications

1. Carter d'échappement turbine (TEC) (28') d'un aéromoteur turbofan comprenant un moyeu annulaire (36) et un carénage annulaire (38) avec un mélangeur (30) attaché à une extrémité aval du carénage (38) pour mélanger des gaz d'échappement avec un courant d'air de dérivation, le mélangeur (30) comportant une pluralité de lobes en extension axiale (50) du mélangeur (30) agencés en crêtes (52) et creux (54) alternés s'étendant de manière divergente dans une direction aval, le mélangeur (30) entourant le moyeu (36) pour former un conduit de gaz d'échappement annulaire (40) entre le mélangeur (30) et le moyeu (36), **caractérisé en ce que** le TEC (28') comprend en outre :
une pluralité de bras supports de redressement (58) s'étendant généralement radialement en travers du conduit de gaz d'échappement annulaire (40) axialement au sein du mélangeur (30) pour raccorder le mélangeur (30) et le moyeu (36), les bras supports de redressement (58) étant moins nombreux qu'un nombre total de creux (54) du mélangeur (30) et raccordés au mélangeur (30) via uniquement un premier groupe sélectionné de creux (54) du mélangeur (30) ; et
une pluralité de bras supports secondaires (74) ayant chacun une longueur de corde moyenne plus courte qu'une longueur de corde moyenne des bras supports de redressement (58) respectifs, les bras supports secondaires (74) s'étendant généralement radialement en travers du conduit de gaz annulaire (40) pour raccorder le mélangeur (30) et le moyeu (36), les bras supports secondaires (74) étant raccordés au mélangeur (30) via un second groupe sélectionné de creux (54) distinct du premier groupe de creux (54), les bras supports secondaires (74) étant raccordés audit second groupe de creux (54) immédiatement en amont d'un bord de fuite desdits creux (54).

2. TEC selon la revendication 1, dans lequel les bras supports de redressement (58) comprennent chacun un profil cambré, le profil cambré étant cambré dans une direction d'un écoulement en vortex entrant des gaz d'échappement.

3. TEC selon la revendication 1 ou 2, dans lequel les bras supports de redressement (58) sont espacés axialement en éloignement des bords de fuite des creux (54) respectifs du premier groupe sélectionné.

4. TEC selon la revendication 1, 2 ou 3, dans lequel les bras supports de redressement (58) sont situés axialement dans une moitié amont axiale du mélangeur (30).

5. Aéromoteur turbofan comprenant le carter d'échappement turbine (TEC) (28') selon la revendication 1, positionné en aval d'une section de turbine de l'aéromoteur turbofan pour diriger un écoulement de gaz d'échappement depuis la section de turbine, le mélangeur (30) ayant une configuration ondulée circonférentielle formant la pluralité de lobes en extension axiale (50) définissant les crêtes (52) et les creux (54) alternés s'étendant de manière divergente vers une extrémité aval du TEC (28'), les crêtes (52) définissant des passages internes axiaux et radialement vers l'extérieur pour diriger des gaz sortant de la section de turbine pour les faire passer à travers le TEC (28'), et les creux (54) définissant des passages externes axiaux et radialement vers l'intérieur pour diriger un courant d'air de dérivation pour le faire passer le long d'une surface externe du TEC (28'), ce qui entraîne un mélange des gaz avec le courant d'air de dérivation, un nombre de bras supports de redressement (58) espacés circonférentiellement ayant chacun un profil cambré et étant situés au sein d'une longueur axiale de la configuration ondulée, les bras supports de redressement (58) raccordant radialement entre eux le moyeu annulaire (36) et le premier groupe sélectionné de creux (54), les bras supports secondaires (74) raccordant radialement entre eux le moyeu annulaire (36) et le second groupe sélectionné de creux (54) non raccordé aux bras supports de redressement (58) et étant situés immédiatement en amont d'un bord de fuite du second groupe sélectionné des creux (54).

6. TEC ou aéromoteur turbofan selon une quelconque revendication précédente, dans lequel les bras supports de redressement (58) comprennent chacun un bord d'attaque et un bord de fuite, les bords d'attaque des bras supports de redressement (58) étant espacés axialement d'un point de départ des crêtes (52) et creux (54) en extension divergente, et les bords de fuite des bras supports de redressement (58) étant espacés axialement des bords de fuite des creux (54) respectifs du premier groupe sélectionné.

7. TEC ou aéromoteur turbofan selon une quelconque revendication précédente, dans lequel les bras supports de redressement (58) et les bras supports secondaires (74) sont répartis circonférentiellement de sorte que chacun des bras supports de redressement (58) soit positionné entre deux des bras supports secondaires (74) adjacents.

8. TEC ou aéromoteur turbofan selon une quelconque revendication précédente, dans lequel les bras supports de redressement (58) et les bras supports secondaires (74) sont répartis circonférentiellement de sorte que chacun des bras supports secondaires (74) soit positionné entre deux des bras supports de redressement (58) adjacents.

9. TEC ou aéromoteur turbofan selon une quelconque revendication précédente, dans lequel les bras supports de redressement (58) et les bras supports secondaires (74) sont répartis circonférentiellement dans un motif alterné de chacun ou plusieurs des bras supports de redressement (58) et de chacun ou plusieurs des bras supports secondaires (74).

10. TEC ou aéromoteur turbofan selon une quelconque revendication précédente, dans lequel un nombre total des bras supports de redressement (58) et des bras supports secondaires (74) est égal au nombre des creux (54).

11. TEC ou aéromoteur turbofan selon l'une quelconque des revendications 1 à 9, dans lequel un nombre total des bras supports de redressement (58) et des bras supports secondaires (74) est inférieur au nombre des creux (54).

12. TEC ou aéromoteur turbofan selon une quelconque revendication précédente, dans lequel l'extrémité aval du TEC (28') comprend un bord de fuite dentelé.

13. TEC ou aéromoteur turbofan selon une quelconque revendication précédente, dans lequel les bras supports secondaires (74) comprennent chacun un profil aérodynamique.

14. TEC ou aéromoteur turbofan selon l'une quelconque des revendications 1 à 12, dans lequel les bras supports secondaires (74) comprennent chacun une plaque plate.
